(19) Europäisches Patentamt

European Patent Office

Office européen des brevets

(11) **EP 1 077 302 A2**

(12) **EUROPÄISCHE PATENTANMELDUNG**

(43) Veröffentlichungstag:
 **21.02.2001 Patentblatt 2001/08**

(51) Int. Cl.⁷: **E06B 3/66**

(21) Anmeldenummer: **00116464.9**

(22) Anmeldetag: **29.07.2000**

(84) Benannte Vertragsstaaten:
 **AT BE CH CY DE DK ES FI FR GB GR IE IT LI LU MC NL PT SE**
 Benannte Erstreckungsstaaten:
 **AL LT LV MK RO SI**

(30) Priorität: **19.08.1999 DE 19938831**

(71) Anmelder: **Hoff, Günter**
 **88718 Daisendorf (DE)**

(72) Erfinder:
 • **Hoff, Axel, Dr. Dipl.**
  **88090 Immenstaad (DE)**

 • **Hoff, Günter**
  **88718 Daisendorf (DE)**
 • **Müller, Wolfgang J.C.**
  **88719 Stetten (DE)**

(74) Vertreter: **Ostertag, Ulrich**
 **Patentanwälte**
 **Dr. Ulrich Ostertag**
 **Dr. Reinhard Ostertag**
 **Eibenweg 10**
 **70597 Stuttgart (DE)**

(54) **Vakuum-Isolationselement, Mehrscheiben-Isolierfenster sowie berührungsloses Lagerungsverfahren**

(57)   Die Erfindung zielt auf die Verminderung des Wärmeübergangs zwischen zwei parallelen, lediglich am Rand mechanisch miteinander verbundenen Platten (1, 2) mit evakuiertem Zwischenraum, insbesondere zwischen zwei Fensterscheiben. Hierzu wird erfindungsgemäß vorgeschlagen, eine von außen auf die Platten (1, 2) einwirkende Druckkraft, z.B. den Atmospärendruck der Luft, durch elektrische und/oder magnetische Kräfte zwischen diesen Platten (1, 2) im wesentlichen zu kompensieren.

Fig. 2

**Beschreibung**

Die Erfindung betrifft ein Vakuum-Isolationselement nach dem Oberbegriff des Anspruchs 1, ein Mehrscheiben-Isolierfenster nach dem Oberbegriff des Anspruch 42 sowie ein berührungsloses Lagerungsverfahren nach dem Oberbegriff des Anspruchs 45.

Fenster sind heute eine der Schwachstellen bei der thermischen Isolation von Gebäuden. Während der Energiefluß z.B. durch Mauerwerk und Dach typischerweise im Bereich von k=0,3 W/(m²K) liegt, erreicht eine Zweischeibenverglasung k=2,8 und eine Dreischeibenverglasung mit Schwergasfüllung (z.B. Krypton oder Xenon) und Infrarotsperrschicht k=0,4-0,9. Die thermische Qualität eines Fensters im Sinne der Jahresenergiebilanz, der effektive Wärmeverlustkoeffizient $k_{eff}$, berechnet sich aus der Differenz der material- und konstruktionsbedingten Wärmedurchgangszahl von Scheibe und Rahmen (k-Wert) und Gesamtenergiedurchlaßgrad der Scheiben (g-Wert), multipliziert mit einem klima- und orientierungsabhängigem Faktor S. Ziel der Entwicklung ist, diese Differenz $k_{eff} = k - g \cdot S$ möglichst kostengünstig zu minimieren, um den Anforderungen von Niedrigenergie- und Passivhäusern zu genügen (Fachinformation PHI-1999/1, Passivhaus Projektierungspaket 99, Passiv-Haus-Institut). Auch die besten heute verfügbaren Fenster stellen in Mitteleuropa über den Winter gemittelt noch eine thermische Verlustquelle für das Haus dar, obwohl sie bei direkter Sonneneinstrahlung über die einfallende Lichtenergie als Wärmequelle wirken.

Die Energieverluste durch ein Fenster werden durch drei Prozesse bestimmt: Die Wärmeleitung durch den Rahmen, die Infrarotabstrahlung durch die Scheiben und der Wärmetransport zwischen den Scheiben (i.a. durch das Füllgas). Allein die Abstrahlung von Energie im infraroten Spektralbereich begrenzt den erreichbaren k-Wert auf 2,8. Sie kann jedoch durch das Aufbringen von Infrarotsperrschichten auf eine oder mehrere Scheiben fast vollständig unterdrückt werden. Solche Beschichtungen und schaltbare Verglasungen als Mehrscheibenanordnung sind ebenso wie isolierende Rahmenkonstruktionen heute Stand der Technik. Das wichtige Teilproblem der Unterdrückung der Warmeleitung in den Zwischenräumen zwischen den Scheiben wird heute durch die Wahl eines geringen Scheibenabstandes zur Unterdrückung der Konvektion und/oder durch eine Schwergasfüllung gelöst. Die Wärmeleitfähigkeit ruhender Gase ist sehr gering; sie nimmt mit zunehmendem Molekulargewicht ab. Hier spielt die durch Temperaturdifferenzen zwischen Innen- und Außenscheibe induzierte Konvektion die dominierende Rolle für den Energietransport. Das Einsetzen der Konvektion und der dadurch verursachte Zusammenbruch der Wärmeisolation durch das Füllgas begrenzt die nutzbare Spaltbreite (d.h. den Abstand zwischen den Scheiben) bei Luft auf 12 mm und bei Schwergas auf 6 mm. Dadurch ergibt sich eine untere Grenze für die Wärmeleitung durch die Scheiben. Der Einsatz dieser beiden Prinzipien hat zur Dreischeibenverglasung mit Schwergasfüllung mit 2x6 mm Spaltbreite und Infrarotsperrschicht geführt, mit der bei entsprechendem Aufwand ein k-Wert von 0,4 bis 0,9 bei reduzierter Lichtdurchlässigkeit erreicht werden kann. Ein Nachteil dieser Schwergasfüllung ist (besonders im Falle von Xenon) der Preis; zusätzlich bestehen bei Verwendung von Krypton Bedenken hinsichtlich einer schwachen Radioaktivität. Eine denkbare weitere Erhöhung der Anzahl der Scheiben würde zwar den k-Wert weiter reduzieren; sie ist jedoch aus Gewichtsgründen ausgeschlossen und würde zudem die Lichtdurchlässigkeit des Fensters (und damit den Energiegewinn für das Haus bei Lichteinstrahlung) drastisch reduzieren und damit $k_{eff}$ wieder erhöhen. Alle inneren Scheiben dienen ausschließlich der Unterdrückung der Konvektion. Ihr Ersatz durch fast gewichtslose Folien ist nicht möglich, da sich diese bei Temperaturwechseln irreversibel verziehen und optisch zu einer großen Beeinträchtigung führen.

Eine optimale Lösung des Teilproblems der Unterdrückung der Wärmeleitung durch den Raum zwischen den Scheiben ließe sich erreichen, wenn dieser Zwischenraum evakuiert werden könnte, da im Vakuum ein Energietransport durch Wärmeleitung nicht möglich ist. Dieses Prinzip wird bei Thermoskannen seit langem erfolgreich angewandt. Seine Übertragung speziell auf Fenster ist jedoch schwierig, da ebene Glasscheiben nicht ohne weiteres in der Lage sind, dem Atmosphärendruck von ca. 1 kg/cm² mechanisch standzuhalten. Es ist seit langem bekannt, daß die Stabilität eines Mehrscheiben-Vakuumfensters durch mechanische Abstandshalter zwischen den Scheiben gewährleistet werden kann (DE-P 387655 und viele spätere Patente; eine gute Übersicht findet sich in R.E. Collins und T.M. Simko, Current state of the science and technology of vacuum glazing, Solar Energy 62, 189-213, 1998). Solche Abstandshalter beeinträchtigen allerdings die Durchsichtigkeit des Fensters und haben sich daher bisher am Markt nicht durchgesetzt. In jüngerer Zeit wurden weitere Entwicklungswege eingeschlagen wie z.B. der Einsatz speziell vorgespannter und gewölbter Scheiben. Solche Scheiben sind jedoch recht teuer, da sie eine aufwendige, energieverzehrende thermische Nachbehandlung der maßgenau zugeschnittenen einzelnen Scheiben notwendig machen und auf kleine Scheibengrößen begrenzt sind. Zusätzlich existieren bei dieser Lösung konstruktionsbedingte Probleme mit der Sichtpräzision, was wiederum die Durchsetzung am Markt für Fenster verhindert, während solche Lösungen z.B. für Solarkollektoren eher einsetzbar sind (z.B. US-P 4186723).

Der Erfindung liegt die Aufgabe zugrunde, Fenster zu schaffen, die sowohl eine hohe Lichtdurchlässigkeit und Durchsichtigkeit als auch einen niedrigen k-Wert (vergleichbar mit dem von Wand und Dach) ermöglichen. Diese Aufgabe wird dadurch gelöst, daß (neben der standardmäßigen Reduktion der Wärmestrahlung durch geeignete Beschichtung) die Wärmeleitung durch das Fenster durch ein Vakuum zwischen den Scheiben nahezu eliminiert wird. Die Kompensation des Atmosphärendruckes erfolgt dabei über ein spezielles Verfahren durch elektrische und/oder magnetische Kräfte zwischen den Fensterscheiben. Dadurch wird es möglich, mit einer Zweischeiben-Vakuumverglasung bei Einsatz einer zusätzlichen Infrarotsperrschicht bei hohem g-Wert einen k-Wert für die Scheibe von unter 0.3 zu erreichen. Weiterhin lassen sich auf Basis dieses Verfahrens auch andersartige ebene Isolationselemente realisieren, indem man die Fensterscheiben durch Platten aus einem anderen - nicht notwendig durchsichtigen - Material ersetzt. Mit solchen Isolationselementen kann eine hohe Wärmedämmung auf kleinem Raum z.B. für den Einsatz in Bauten oder Kühlboxen oder -containern sowie Nachtspeicheröfen erreicht werden. Neben der Möglichkeit einer deutlich besseren Wärmeisolierung bietet die erfindungsgemäße Einrichtung den zusätzlichen Vorteil, daß solche Fenster oder Isolationselemente aufgrund des Vakuums eine deutlich bessere Schallisolation bieten sollten als herkömmliche Lösungen.

Eine triviale Realisierung der Erfindung ließe sich durch eine gleichnamige elektrische Aufladung der gegenüberliegenden Platten erreichen. So würde bei zwei kreisförmigen Scheiben mit 1 m Durchmesser und einem Abstand von 1 mm eine gleichnamige Aufladung mit 1 mC, d.h. einer Flächenladungsdichte von $1.4 \cdot 10^{-3}$ C/m$^2$, ausreichen, um z.B. einen äußeren Luftdruck von 1 bar durch elektrostatische Abstoßung vollständig zu kompensieren. Eine solche Anordnung dürfte aber aufgrund der damit verbundenen hohen elektrischen Feldstärken für die meisten Anwendungen nicht praktikabel sein.

Die Feldstärke im Außenraum läßt sich jedoch deutlich reduzieren, wenn man zu anderen Ladungsverteilungen übergeht. So ist bekannt, daß die von einem elektrischen Dipol im Fernfeld erzeugte Feldstärke proportional zu $r^{-3}$ abfällt (im Gegensatz zum $r^{-2}$-Feld einer einzelnen Ladung). Allerdings führt eine gleichmäßig dichte Belegung der beiden Platten mit je einer Dipolschicht nicht zum Ziel, da dann (im Grenzfall der unendlichen Ausdehnung der Platten, der in den praktisch relevanten Fällen angenommen werden kann) die resultierende Kraft zwischen den Platten gleich Null ist.

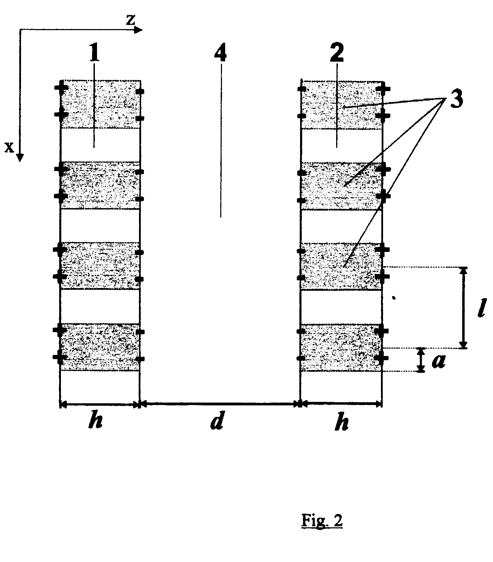

Dieses Problem wird nun erfindungsgemäß dadurch gelöst, daß die Platten nicht mit einer gleichmäßig dichten Dipolschicht belegt werden, sondern daß auf beiden Platten (1,2) die Dipole in Bereichen (3) - im folgenden „Spots" genannt - konzentriert werden, während außerhalb dieser Spots keine Dipole vorhanden sind. Als vorteilhaft erweist sich eine Anordnung, in der sich auf jeder Platte eine gitterförmige Anordnung solcher Spots befindet, wobei jeder Spot auf der einen Platte einem Spot auf der anderen Platte zentral so gegenübersteht, daß gleichnamig geladene Pole der Dipole gegeneinander gerichtet sind (vgl. Fig. 2). Bei geeigneter Wahl der Parameter lassen sich auf diese Weise abstoßende elektrostatische Kräfte zwischen den Platten erzeugen, die ausreichen, um einen weiten Bereich äußerer Drücke zu kompensieren. Gleichzeitig fällt bei dieser Anordnung die Feldstärke im Außenraum deutlich schneller ab als im Fall der gleichnamig aufgeladenen Platten. Ein weiterer Vorteil der auf Dipolen basierenden Anordnung ist, daß sie sich nicht nur mit elektrischen, sondern auch mit magnetischen Dipolen realisieren läßt.

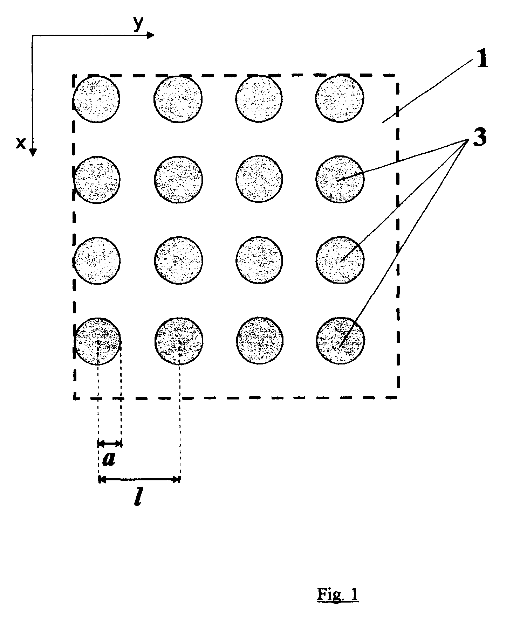

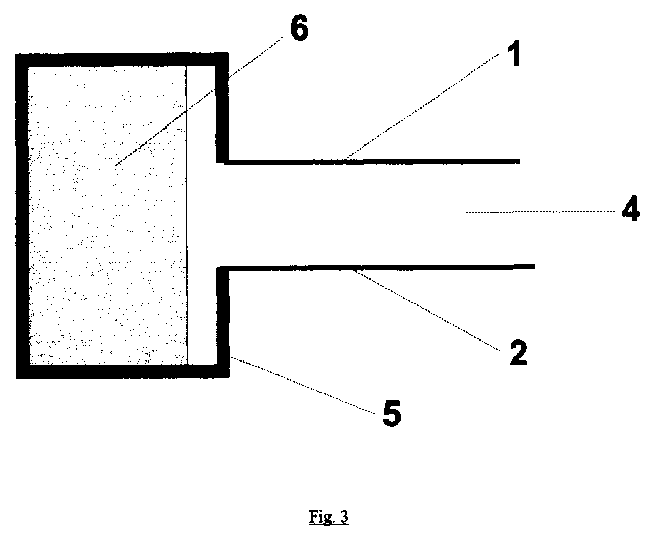

Zur Erläuterung dieser erfindungsgemäßen Anordnung dienen die folgenden Abbildungen. Fig. 1 zeigt eine Draufsicht auf ein Vakuum-Isolationselement mit elektrischen Dipolen. Die zylinderförmigen, mit Dipolen belegten Spots (3) mit Radius a und Höhe h sind in Form eines quadratischen Gitters mit der Gitterkonstanten 1 angeordnet. Fig. 2 zeigt einen Schnitt durch dieselbe Anordnung. Die elektrischen Dipole der Länge h sind hier gemäß Patentanspruch 21 durch Einbringen elektrischer Ladungen in die Platten (1) und (2) entstanden, was in der Abbildung durch die „+/"-„-Zeichen schematisch dargestellt ist. Die physikalisch wesentlichen Parameter, auf die unten Bezug genommen wird, sind die Länge der Dipole h, der Radius der Spots a, die Gitterkonstante l und der Abstand zwischen den einander zugewandten Polen der Dipole d, der gleichzeitig der Breite des Vakuumspalts (4) entspricht. Fig. 3 zeigt eine Möglichkeit zur hochisolierenden Ausgestaltung der Rahmenkonstruktion. Um eine effektive Wärmeisolation zwischen den Platten (1) und (2) zu erreichen, muß der Weg zwischen ihnen über das Rahmenmaterial (5) künstlich verlängert werden. In den so entstehenden Hohlraum (6) können vorteilhaft z.B. Getter mit hoher Wärmeisolation eingebracht werden, die das Vakuum im Spalt (4) stabilisieren helfen.

Im folgenden sollen einige Überlegungen zur konkreten Realisierbarkeit einer solchen erfindungsgemäßen Anordnung für die Konstruktion eines Vakuumfensters dargelegt werden. Für die beispielhafte Parameterkombination $a = 10^{-6}$m, $h = 10^{-4}$m, $d = 10^{-5}$m und $l = 2 \cdot 10^{-6}$m ergibt sich z.B. ein elektrostatischer Druck von 1 bar bei einer Belegung der Oberflächen in den Spots entsprechend Patentanspruch 21 mit einer lokalen Flächenladungsdichte von $2.23 \cdot 10^{-3}$ C/m$^2$. Solche Flächenladungsdichten sind prinzipiell erreichbar, so wird z.B. für Folien aus Polyethylenterephthalat („Mylar") eine Durchschlagsfeldstärke von 510 kV/mm angegeben, was bei einer relativen Dielektrizitätskonstante der Folie $\varepsilon_r$ von 3.3 einer Flächenladungsdichte von ca. $1.5 \cdot 10^{-2}$ C/m$^2$ entspricht, d.h. eine Größenordnung über dem für die gewünschte Druckkompensation benötigten Wert. Noch höhere Werte lassen sich bei speziellen Teflonfolien erreichen, einem Material, das zur Herstellung von Elektreten eingesetzt wird. Die Durchschlagsspannung ist hier von der Foliendicke abhängig (sie steigt bei abnehmender Dicke!); bei einer Dicke von 10 μm erreicht sie ca. 3500 kV/mm und beträgt bei 100 μm noch ca. 1700 kV/mm. Bei einem $\varepsilon_r$ von 2.2 entspricht dies einer Obergrenze für die erforderliche Flächenladungsdichte von $6.8 \cdot 10^{-3} - 3.3 \cdot 10^{-3}$ $C/m^2$. Von Bedeutung ist in diesem Zusammenhang auch, daß die elektrische Leitfähigkeit solcher Elektretfolien bei zunehmender Feldstärke abnimmt, so daß die Lebensdauer solcher Elektrete mit abnehmender Dicke (und damit zunehmender Feldstärke) steigt. Herkömmliche Elektrete haben eine Lebensdauer von über 10 Jahren, es existieren aber auch Elektrete auf Basis von Teflonfolien mit einer Lebensdauer im Bereich von 1.000 bis 100.000 Jahren. [B. Hilczer, J. Malecki: Electrets. Elsevier, Amsterdam 1986]

Die oberste physikalische Grenze für elektrische Feldstärken in Materie ist durch die Ionisationsenergie der Atome gegeben und liegt in der Größenordnung von 10 V/nm, was einer maximalen Flachenladungsdichte von mindestens (bei $\varepsilon_r$=1) ca. $8.9 \cdot 10^{-2}$ $C/m^2$ entspricht. Die für eine Druckkompensation mittels elektrischer Dipole benötigten Flächenladungsdichten sind daher für viele Parameterkombinationen a, d, h, l durchaus realisierbar. Für magnetische Feldstärken läßt sich eine oberste physikalische Grenze nicht so leicht abschätzen. Für die momentan realisierbaren magnetischen Flächenpolarisationsladungsdichten gibt ein gängiges Lehrbuch (Bergmann/Schäfer; Lehrbuch der Experimentalphysik, Band II, 4. Auflage) einen Wert von $\sigma_m$=6,37 $\cdot$ $10^5$ A/m an. Die Entwicklung leistungsfähiger Permanentmagnete ist aber noch nicht an ihre physikalischen Grenzen gelangt. So findet man für neuere permanentmagnetische Materialien auch deutlich höhere Flächenpolarisationsladungsdichten wie z.B. $\sigma_m$ = 1,25 $10^6$ A/m für den Magnetwerkstoff $Nd_2Fe_{14}B$ (J. Chavanne et al.: Static devices with new permanent magnets, in: S.G. Sankar et al (Ed.), High performance magnet materials, Materials research society, Pittsburgh, 1987, S. 307-320). Aus solchen Werkstoffen lassen sich auch dünne Folien gewinnen, mit denen eine Realisierung einer Anordnung gemäß Anspruch 23 möglich wäre (J.F. Zasadzinski et al.: Thin film fabrication of $R_2Fe_{14}B$ compounds, in: S.G. Sankar et al. (Ed.), High performance magnet materials, Materials research society, Pittsburgh, 1987, S. 55-63). Mit den heute verfügbaren magnetischen Flächenpolarisationsladungsdichten kommt man damit ebenfalls in den Bereich, in dem eine Kompensation von Druckkräften in Höhe des mittleren Atmosphärendrucks durch magnetostatische Kräfte möglich wird. Fur die Konstruktion von Fenstern, bei der es wesentlich auf die Durchsichtigkeit der verwendeten Werkstoffe ankommt, bietet sich eine Verwendung nichtmetallischer (z.B. oxidischer) Magnetwerkstoffe (insbesondere von Oxiden seltener Erden) an.

Für die technische Erzeugung solcher elektrischer Ladungsverteilungen lassen sich z.B. Elektronenstrahllithographiesysteme anwenden, um Elektronen oder Protonen in die Oberfläche von elektrisch nichtleitenden Folien oder Platten einzubringen. Speziell vorteilhaft ist hier die Anwendung gemäß DE-P 3741124, mit der die Erzeugung von ca. $10^7$ Spots pro Sekunde möglich sein sollte.

Um mit der erfindungsgemäßen Anordnung von einander gegenüberliegenden Dipolspots einen möglichst hohen Druck kompensieren zu können, ist eine genaue Abstimmung der frei wählbaren Parameter a, d, h und l erforderlich. Die Bestimmung optimaler Anordnungen erfolgt hierbei vorteilhaft durch die numerische Lösung der Integrale für die elektro- bzw. magnetostatischen Druckkräfte. Aus den durchgeführten umfangreichen numerischen Berechnungen verschiedener Anordnungen lassen sich folgende generellen Regeln für die Wahl einer sinnvollen Anordnung ableiten: Die Breite d des evakuierten Spaltes zwischen den die Dipole tragenden Platten sollte kleiner als die Dipollänge h sein, da das Dipolfeld und damit die Abstoßungskraft zwischen den Dipolen außerhalb dieser Länge zu stark abfällt. Der Spotradius a sollte ebenfalls deutlich kleiner (zwei bis drei Größenordnungen) als die Dipollänge h und kleiner als die Spaltbreite d sein; ein kleineres lokales Optimum ergibt sich allerdings auch für a ≈ h. Der Spotradius a kann durch die thermische Ausdehnung der Scheiben nach unten begrenzt sein, da sich bei einer Temperaturdifferenz von 30 K zwischen den Scheiben eine Verschiebung der Scheiben gegeneinander von ca. 300μm/m ergeben kann und es unbedingt vermieden werden muß, daß durch eine solche Verschiebung die Spots einander nicht mehr gegenüber, sondern „auf Lücke" stehen. Ein Ansatz für die Lösung des Problems ist die Wahl von Konfigurationen mit Spotdurchmessern oberhalb der maximal zu erwartenden Verschiebung; eine bessere Lösung könnte sich durch die Verwendung spezieller starrer Rahmen ergeben, so daß die thermische Ausdehnung nicht mehr zu einer lateralen Verschiebung der Scheiben führt, sondern nur noch zu einer leichten Wölbung und damit Abstandsänderung (vgl. R.E. Collins und T.M. Simko, Current state of the science and technology of vacuum glazing, Solar Energy 62, 189-213, 1998). Die Spaltbreite d ist andererseits sowohl durch die Fertigungstoleranzen für die Rauhigkeit und Ebenheit der Platten nach unten begrenzt als auch durch die Forderung, daß sie deutlich größer als die Wellenlänge infraroten Lichtes sein muß, um einen Wärmeübergang durch Strahlung zwischen den Scheiben wirkungsvoll verhindern zu können. Damit ergibt sich eine untere Schranke für d im Bereich zwischen 1 und 10 μm. Andererseits sollte die Dipollänge h möglichst klein sein, um einerseits nicht zu dicke Scheiben zu erzwingen und andererseits einen möglichst schnellen Feldabfall im Außenraum zu erreichen. Diese Überlegungen dürften h auf einen Wert zwischen ca. 100 μm und 1 mm begrenzen. Aus der Kombination dieser Bedingungen ergibt sich als ein für eine optimale Anordnung sinnvol-

ler Parameterbereich h ∈ [100 μm .. 1 mm], d ∈ [1 .. 100 μm], a ∈ [100 nm .. 10 μm]. Die Gitterkonstante 1 sollte ungefähr das Zwei- bis Vierfache des Spotradius a betragen, da bei einem zu kleinen 1 die Anordnung mehr und mehr einer gleichmäßigen Belegung mit Dipolen entspricht - durch die keine resultierenden Kräfte erzeugt werden können - während bei zu großem 1 die vom einzelnen Spot erzeugte Kraft zwar relativ groß wird, die Dichte der Spots jedoch nicht mehr ausreicht, um eine hohe Kraft über die gesamte Fläche zu erzeugen. Typischerweise findet sich bei konstanten a, d und h bei Variation von I an einer Stelle ein Maximum des erreichbaren Gesamtdrucks, so daß sich die optimale Wahl von I in Abhängigkeit von den anderen Parametern fast zwangsweise ergibt.

Weiterhin ist bei der Wahl der Parameter zu beachten, daß (im Gegensatz zu einer gewöhnlichen Feder) bei der erfindungsgemäßen Anordnung die Kraft zwischen den Scheiben bei Verringerung des Abstandes d nur solange zunimmt, bis ein gewisser, von den anderen Parametern abhängiger, Wert $d_{min}$ erreicht wird. Wird dieser Wert unterschritten, nimmt die Abstoßungskraft wieder leicht ab und bleibt dann angenähert konstant. Um eine Kompensation von Druckschwankungen zu ermöglichen, ist es daher wesentlich, die Parameter so zu wählen, daß auch bei den stärksten zu erwartenden Druckschwankungen der Abstand d immer in dem Bereich bleibt, in dem die elektromagnetische Abstoßung eine positive Federkonstante aufweist.

Neben der Erzeugung der gewünschten Abstoßungskraft führt die erfindungsgemäße Anordnung auch zu weiteren nicht unerheblichen Kräften im Inneren der Scheiben, die jedoch beherrschbar sind. Einerseits treten im Trägermaterial der Dipole Druckkräfte sowie Scherkräfte auf, die durch das Tragermaterial kompensiert werden müssen. Relevanter ist jedoch, daß die abstoßende Kraft zwischen den Scheiben in dem Moment eine Komponente parallel zu den Scheiben bekommt, in dem sich die Dipole im Mittel nicht mehr zentral gegenüberstehen. Dies erfordert eine exakte Positionierung der Scheiben mit einer Genauigkeit deutlich unterhalb von a. Insbesondere muß auch - wie oben bereits ausgeführt - sichergestellt werden, daß sich nicht durch unterschiedliche thermische Ausdehnung der Scheiben eine Verschiebung der Dipole in der Größenordnung ihres Radius ergibt. Diese Probleme lassen sich durch die Verwendung starrer Rahmenkonstruktionen, die entsprechende Anpassung der Werte für a und die Einhaltung enger Fertigungstoleranzen prinzipiell beherrschen. Darüber hinaus könnte es von Vorteil sein, die elektromagnetischen Kräfte so zu modifizieren, daß die positive Rückkopplung zwischen horizontaler Verschiebung der Scheiben und auftretender horizontaler Kraft (die mit dem Theorem von Earnshaw korrespondiert, demzufolge eine Anordnung aus elektrischen oder magnetischen Dipolen nicht in allen Freiheitsgraden stabil sein kann [vgl. F.C. Moon, Superconducting Levitation, Wiley 1994]) soweit abgemildert wird, daß die Anordnung eine geringere Instabilität gegen horizontale Verschiebungen erreicht. Eine einfache Abmilderung läßt sich einfach dadurch erreichen, daß man die Position der Dipole auf einer oder beiden Scheiben stochastisch gegenüber ihrer „Gleichgewichtsposition" verrauscht, wodurch sich bei einer horizontalen Verschiebung der Scheiben aus der Gleicbgewichtsposition ein zunächst schwächerer Anstieg der forttreibenden Kraft ergibt als im Fall mit exakt positionierten Spots. Eine noch bessere Lösung erhält man, wenn man z.B. kreisförmigen Spots auf der einen Scheibe Spots in Form von Kreisringen auf der anderen Scheibe gegenüberstellt (oder eine topologisch äquivalente Lösung wählt). Der Preis für diesen Vorteil ist in beiden Fällen eine leichte Reduzierung der erzielbaren elektro- bzw. magnetostatischen Kräfte in Normalenrichtung zwischen den Scheiben.

Um das im Außenraum vorhandene Feld zu minimieren ist ein möglichst kleiner Wert von h sinnvoll. Bei einem Wert für h von 2 mm und einer Anordnung, die zur Kompensation des äußeren Luftdrucks ausreicht, wird in einem Abstand von 5 cm zur Spaltmitte die Feldstärke von 5 kV/m unterschritten; in einem Abstand von 50 cm beträgt die Feldstärke noch 1 V/m. Zur Einhaltung der Grenzwerte und zur Reduktion der - durch eine elektrostatische Aufladung geförderten - Staubansammlung auf den geladenen Flächen kann es daher sinnvoll sein, eine Anordnung zu wählen, bei denen als Träger der Dipolschicht eine Folie fungiert, die auf die zum Vakuumspalt gerichtete Seite der Scheibe aufgeklebt ist. Gegebenenfalls ließe sich durch eine weitere Scheibe, welche in gewissem Abstand zur an die Folie angrenzenden Scheibe angebracht ist, der Abstand der äußeren Begrenzung des Elementes zur ladungstragenden Schicht weiter vergrößern.

Das Problem, in einem extrem schmalen, lateral ausgedehnten Spalt ein gutes Vakuum zu erzeugen und aufrechtzuerhalten, ließe sich mit der Verwendung solcher Folien ebenfalls lösen. Es ist bekannt, daß im Vakuum vollständig entgaste Polymerfolien in der Lage sind, Gasmoleküle zu adsorbieren und somit als Getter zu wirken. Wenn bei einer Produktion der Isolationselemente unter Vakuum entsprechend vorgelagerte Folien zum Einsatz kommen, würden diese über eine lange Zeit die Qualität des Vakuums im Spalt sicherstellen. Gegebenenfalls lassen sich im Rahmen des Isolationselementes Öffnungen vorsehen, über die der Spalt erneut evakuiert werden kann, wenn dies nach längerem Einsatz nötig werden sollte. Prinzipiell wurde aber bereits für andere Ausprägungen von Vakuumfenstern (z.B. mit Abstandshaltern) gezeigt, daß das Vakuum zwischen den Scheiben auch über längere Zeit stabil ist (M. Lenzen und R.E. Collins, Long-term field tests of vacuum glazing, Solar Energy 61, 11-15, 1997).

Außerdem sind auch Mischformen zwischen der völligen Evakuierung des Spaltes und herkömmlichen Fensterelementen mit luft- oder gasgefülltem Spalt möglich. Die physikalischen Elementarprozesse der Energieübertragung zwischen Gasen und Festkörpern wurden in einem internationalen Forschungsprogramm von 1968-1977 untersucht. Ziel war die Reduktion des Wärmeübergangs und die Verminderung der Reibungskräfte zwischen Gasen und Festkörpern durch spezielle Oberflächenbehandlung [G. Hoff, in: H.J. Lugt (ed.), Proceedings of the second symposium on fluid-solid surface interactions, Naval Ship Research and Development Center, Bethesda (1974), S. 3-6; K.H. Gronau, H. Rieger (eds.), Gas-Oberflächen-Wechselwirkung. Teil 1: Gasreibung und aerothermische Erhitzung im Bereich der Strömung verdünnter Gase, Bundesministerium der Verteidigung BMVg-FBWT 76-19 (1976)]. Der Effekt einer Reduktion des Energieübergangs Gas-Festkörper (um maximal ca. 99%) durch Sicherstellen einer optimalen Oberflächenstruktur, die zu einer elastischen Wechselwirkung zwischen Gas und Festkörperoberfläche führt, läßt sich jedoch nur bei stark erniedrigten Drücken realisieren [K. Bärwinkel, in: H.J. Lugt (ed.), Proceedings of the second symposium on fluid-solid surface interactions, Naval Ship Research and Development Center, Bethesda (1974), S. 17-37]. Es wäre daher prinzipiell auch möglich, den gewünschten Effekt einer Superisolation durch die Kombination einer starken Reduzierung des Innendrucks im Spalt bei entsprechender elektromagnetischer Druckkompensation mit einer elastischen Wechselwirkung zwischen Gas und Festkörperoberfläche, die den Wärmeübergang unterbindet, zu erreichen.

Bei einem k-Wert von 0.3 wirken Fenster auch im Winter als absolute Wärmequelle für ein Gebäude, da dann auch an einem trüben Wintertag mehr Energie in Form von sichtbarem Licht gewonnen wird als durch Wärmeleitung und Abstrahlung verloren geht. Bei entsprechend angepaßter Architektur benötigen Gebäude mit derartigen Fenstern in den gemäßigten Breiten im Winter keine Heizung mehr. Hier liegt ein großes Einsparpotential für fossile Brennstoffe und damit eine bedeutende Möglichkeit zur Reduktion der $CO_2$-Emission.

Neben der Konstruktion von Vakuumfenstern und Vakuum-Isolationselementen könnte sich das erfindungsgemäße Verfahren auch für eine elektrooder magnetostatische Levitation flächig ausgedehnter Körper eignen. Bekannt ist die magnetische Lagerung von Wellen, um die bei der Drehbewegung auftretenden Reibungskräfte zu vermindern (z.B. DE-P 1441162 sowie zahlreiche weitere Anmeldungen mit spezifischen Verbesserungen). Diese Lagerung basiert auf zwei Permanentmagneten mit einander gegenüberliegenden ringförmigen Poloberflächen, von denen der eine am Rotor und der andere am Stator befestigt ist und die gleichpolig magnetisiert sind, so daß die sich abstoßen. Viele der Verbesserungen dieses ursprünglichen Prinzips zielen auf die Stabilisierung der Anordnung gegen Schwingungen oder Bewegungen senkrecht zur Welle (z.B. DE-P 1750602, DE 2312001), da solche herkömmlichen Magnetlager bei geringer Rotationsgeschwindigkeit des Rotors instabil sind. Eine andere Lösung des Stabilitätsproblems ergibt sich durch den Einsatz supraleitender Magnetlager (z.B. DE-P 19641438, DE-P 19643844).

Im Gegensatz dazu sind zur magnetischen Lagerung flächig ausgedehnter - z.B. ebener - Strukturen kaum Anordnungen bekannt. Die DE-OS 4023403 schlägt die berührungsfreie, bewegliche magnetische Lagerung eines Positioniertisches vor, geht aber von der Verwendung weniger herkömmlicher Magnetlager zur Erfüllung dieses Zweckes aus. Hier bietet die Lagerung mittels einem Gitter von Dipolspots den Vorteil einer gleichmäßigeren Kraftverteilung.

**Patentansprüche**

1.    Vakuum-Isolationselement mit mindestens zwei parallel angeordneten, lediglich am Rand mechanisch miteinander verbundenen Platten mit evakuiertein Zwischenraum, dadurch gekennzeichnet, daß eine von außen auf die Platten einwirkende Druckkraft durch elektrische und/oder magnetische Kräfte zwischen diesen Platten im wesentlichen kompensiert wird.

2.    Vakuum-Isolationselement nach Anspruch 1, dadurch gekennzeichnet, daß die äußere Druckkraft durch eine gleichnamige elektrische Aufladung der Platten oder von mechanisch mit ihnen verbundenen Schichten im wesentlichen kompensiert wird.

3.    Vakuum-Isolationselement nach Anspruch 1, dadurch gekennzeichnet, daß die äußere Druckkraft durch eine gegenpolige Belegung der Platten oder von mechanisch mit ihnen verbundenen Schichten mit elektrischen Dipolen im wesentlichen kompensiert wird.

4.    Vakuum-Isolationselement nach Anspruch 1, dadurch gekennzeichnet, daß die äußere Druckkraft durch eine gegenpolige Belegung der Platten oder von mechanisch mit ihnen verbundenen Schichten mit magnetischen Dipolen im wesentlichen kompensiert wird.

5.    Vakuum-Isolationselement nach den Ansprüchen 1, 3 und 4, dadurch gekennzeichnet, daß nur gewisse, beliebig geformte, Bereiche („Spots") der Platten oder von mechanisch mit ihnen verbundenen Schichten mit elektrischen oder magnetischen Dipolen belegt sind.

6.    Vakuum-Isolationselement nach den Ansprüchen 1 und 3 - 5, dadurch gekennzeichnet, daß sich die Spots auf beiden Platten mittig gegenüberstehen.

**7.** Vakuum-Isolationselement nach den Ansprüchen 1 und 3 - 6, dadurch gekennzeichnet, daß die Spots kreisförmig sind.

**8.** Vakuum-Isolationselement nach den Ansprüchen 1 und 3 - 6, dadurch gekennzeichnet, daß die Spots die Form von Kreisringen haben.

**9.** Vakuum-Isolationselement nach den Ansprüchen 1 und 3 - 8, dadurch gekennzeichnet, daß einem kreisförmigen Spot ein Spot in Form eines Kreisringes gegenübersteht.

**10.** Vakuum-Isolationselement nach den Ansprüchen 1 und 3 - 9, dadurch gekennzeichnet, daß die Spots auf beiden Platten in Form eines regelmäßigen Gitters angeordnet sind.

**11.** Vakuum-Isolationselement nach Anspruch 10, dadurch gekennzeichnet, daß die Spots auf beiden Platten in Form eines quadratischen Gitters angeordnet sind.

**12.** Vakuum-Isolationselement nach Anspruch 10, dadurch gekennzeichnet, daß die Spots auf beiden Platten in Form eines hexagonalen Gitters angeordnet sind.

**13.** Vakuum-Isolationselement nach den Ansprüchen 1 und 3 - 12, dadurch gekennzeichnet, daß die Spots auf mindestens einer der Platten gegenüber ihrer exakten Gitterposition stochastisch um eine kleine Strecke verschoben sind.

**14.** Vakuum-Isolationselement nach den Ansprüchen 1 und 3 - 13, dadurch gekennzeichnet, daß die Druckkompensation durch eine Kombination von Spots mit elektrischen und mit magnetischen Dipolen erreicht wird, wobei für beide Spotgruppen die in den Ansprüchen 5 - 13 niedergelegten Regeln gelten.

**15.** Vakuum-Isolationselement nach Anspruch 14, dadurch gekennzeichnet, daß sich die mit magnetischen Dipolen belegten Spots in den Zwischenräumen zwischen den mit elektrischen Dipolen belegten Spots befinden.

**16.** Vakuum-Isolationselement nach den Ansprüchen 1 - 15, dadurch gekennzeichnet, daß die Parameter elektrische oder magnetische Flächenladungsdichte, Länge der Dipole, Radius der Spots, Abstand der Spots voneinander und Breite des Zwischenraumes zwischen den Platten so gewählt werden, daß die elektrischen und/oder magnetischen Kräfte einen Druck zwischen den Platten in Höhe der mittleren zu kompensierenden äußeren Druckkraft erzeugen und daß die Parameter a, d, h, l, $\sigma$ so gewählt sind, daß auch bei den stärksten zu erwartenden Druckschwankungen der Abstand d immer in dem Bereich bleibt, in dem die elektromagnetische Abstoßung eine positive Federkonstante aufweist, so daß eine Kompensation der Druckschwankungen möglich ist.

**17.** Vakuum-Isolationselement nach den Ansprüchen 1 und 3 - 16, dadurch gekennzeichnet, daß der Radius der Spots im Bereich zwischen 1 und 1000 $\mu$m liegt.

**18.** Vakuum-Isolationselement nach den Ansprüchen 1 und 3- 17, dadurch gekennzeichnet, daß der Abstand der Spots (Gitterkonstante) im Bereich zwischen 2 und 3000 $\mu$m liegt.

**19.** Vakuum-Isolationselement nach den Ansprüchen 1 und 3 - 18, dadurch gekennzeichnet, daß die Breite des Vakuumspaltes (der Abstand zwischen den inneren Enden der Dipole) im Bereich zwischen 1 und 100 $\mu$m liegt.

**20.** Vakuum-Isolationselement nach den Ansprüchen 1 - 3 und 5 - 19, dadurch gekennzeichnet, daß elektrische Ladungen direkt in die Platten eingebracht werden.

**21.** Vakuum-Isolationselement nach den Ansprüchen 1, 3 und 5 - 20, dadurch gekennzeichnet, daß in die Innenseite der Platten negative (positive) Ladungen und in die Außenseite eine gleiche Zahl positiver (negativer) Ladungen eingebracht werden, so daß jede Scheibe mit gleichsinnig orientierten elektrischen Dipolen belegt ist.

**22.** Vakuum-Isolationselement nach den Ansprüchen 1 und 4 - 19, dadurch gekennzeichnet, daß Substanzen mit starkem magnetischen Dipolmoment unter dem Einfluß äußerer Magnetfelder so in die Innenseite der Platten eingebracht werden, daß jede Scheibe mit gleichsinnig orientierten magnetischen Dipolen belegt ist.

**23.** Vakuum-Isolationselement nach den Ansprüchen 1 - 19, dadurch gekennzeichnet, daß auf die Innenseite der Platten Folien aufgebracht werden, die Träger der elektrischen Ladungen oder der elektrischen oder magnetischen Dipole sind.

**24.** Vakuum-Isolationselement nach Anspruch 23, dadurch gekennzeichnet, daß die auf der Innenseite der Platten aufgebrachten Folien ein elektrisches Dipolmoment dadurch erhalten, daß ihre eine Seite negativ und die andere Seite positiv aufgeladen wird.

**25.** Vakuum-Isolationselement nach den Ansprüchen 23 und 24, dadurch gekennzeichnet, daß die negative Aufladung der Folie durch Beschuß mit Elektronen und die positive Aufladung durch Entzug von Elektronen geschieht.

26. Vakuum-Isolationselement nach den Ansprüchen 23 - 25, dadurch gekennzeichnet, daß die Folien ein nichtkristallines, klar durchsichtiges Material mit hohem elektrischen Widerstand umfassen.

27. Vakuum-Isolationselement nach den Ansprüchen 23 - 26, dadurch gekennzeichnet, daß die Dicke der Folien im Bereich von 1 - 500 μm liegt.

28. Vakuum-Isolationselement nach den Ansprüchen 23 - 27, dadurch gekennzeichnet, daß die Folien Polymere umfassen.

29. Vakuum-Isolationselement nach den Ansprüchen 23 - 28, dadurch gekennzeichnet, daß die Folien Polyethylen, Polyethylenterephthalat oder vollständig fluorierte Kohlenwasserstoffe wie Polytetrafluorethylen (Teflon) oder Polyfluorethylenpropylen umfassen.

30. Vakuum-Isolationselement nach den Ansprüchen 23 - 29, dadurch gekennzeichnet, daß die Folien vor dem Einbau in das Vakuum-Isolationselement durch längeres Erhitzen gasfrei gemacht worden sind.

31. Vakuum-Isolationselement nach den Ansprüchen 23 - 30, dadurch gekennzeichnet, daß die gasfreien Folien als Getter wirken.

32. Vakuum-Isolationselement nach den Ansprüchen 1-3 und 5-19, dadurch gekennzeichnet, daß auf die Innenseite der Platten eine Schicht aus Material mit hohem elektrischen Dipolmoment so aufgedampft wird, daß sich die Dipole gleichsinnig orientieren.

33. Vakuum-Isolationselement nach Anspruch 32, dadurch gekennzeichnet, daß die gleichsinnige Orientierung der aufgedampften Dipole dadurch erreicht wird, daß sich die Platte während des Aufdampfvorganges in einem elektrischen Feld befindet.

34. Vakuum-Isolationselement nach den Anspruch 32, dadurch gekennzeichnet, daß die aufgedampfte Schicht Bariumtitanat ($BaTiO_3$) oder Magnesiumtitanat ($MgTiO_3$) umfaßt.

35. Vakuum-Isolationselement nach den Ansprüchen 1-34, dadurch gekennzeichnet, daß mit dem Spalt zwischen den Platten weitere evakuierte Hohlräume verbunden sind, die mit Gettern gefüllt sind.

36. Vakuum-Isolationselement nach den Ansprüchen 1-35, dadurch gekennzeichnet, daß in ihm ein Anschluß für eine Vakuumpumpe vorgesehen ist, um den Spalt zwischen den Platten bei Bedarf erneut evakuieren zu können.

37. Vakuum-Isolationselement nach den Ansprüchen 1-36, dadurch gekennzeichnet, daß die äußere Druckkraft durch die elektrischen und/oder magnetischen Kräfte soweit partiell kompensiert wird, daß die noch verbleibenden Kräfte durch mechanische Gegenkräfte, die von den Platten und/oder der Halterung aufgebracht werden, kompensiert werden können.

38. Vakuum-Isolationselement nach Anspruch 37, dadurch gekennzeichnet, daß die äußere Druckkraft durch die elektrischen und/oder magnetischen Kräfte nur partiell kompensiert wird und daß die verbleibenden Kräfte durch eine Gasfüllung zwischen den Platten kompensiert werden, die einen entsprechenden Druck erzeugt.

39. Vakuum-Isolationselement nach Anspruch 38, dadurch gekennzeichnet, daß die Innenseiten der Platten so ausgestaltet sind, daß über eine Reduktion des Energieakkommodationskoeffizienten der Gas-Oberflächen-Wechselwirkung die Wärmeleitung zwischen den Scheiben durch das verbleibende Gas weiter reduziert wird.

40. Vakuum-Isolationselement nach den Ansprüchen 1-39, dadurch gekennzeichnet, daß die Wärmeleitung von innen nach außen über den Rahmen dadurch reduziert wird, daß die im Rahmen befindliche mechanische Brücke zwischen den Platten durch künstliche Verlängerung des Weges zwischen den Platten und Einsatz spezieller wärmedämmender Materialien höchstisolierend ausgestaltet wird.

41. Vakuum-Isolationselement nach Anspruch 40, dadurch gekennzeichnet, daß der entstehende Hohlraum mit isolierendem, als Getter wirkendem Material gefüllt ist.

42. Mehrscheiben-Isolierfenster nach den Ansprüchen 1-41, dadurch gekennzeichnet, daß der Raum zwischen den Fensterscheiben gemäß den vorstehenden Ansprüchen höchstisolierend ausgestaltet ist und die hierfür benötigten Materialien wie Folien oder Dipolschichten klar durchsichtig sind.

43. Mehrscheiben-Isolierfenster nach Anspruch 42, dadurch gekennzeichnet, daß das Fenster aus mehr als zwei Scheiben besteht und der Zwischenraum zwischen einem oder mehreren Paaren von Scheiben gemäß den vorstehenden Ansprüchen höchstisolierend ausgestaltet ist.

**44.** Mehrscheiben-Isolierfenster nach einem der Ansprüche 42-43, dadurch gekennzeichnet, daß auf einer oder mehreren Scheiben eine Infrarotsperrschicht aufgebracht ist.

**45.** Berührungsloses Lagerungsverfahren zur Lagerung flächig ausgedehnter Strukturen, dadurch gekennzeichnet, daß eine berührungslose Kraftübertragung zwischen den Flächen durch eine Anordnung elektrischer oder magnetischer Dipole auf den Flächen gemäß den Patentansprüchen 5 - 16, 20 - 29 und 32 - 34 erreicht wird, wobei die Parameter a, d, h, l so eingestellt werden, daß die von der jeweiligen Problemstellung vorgegebenen Kräfte übertragen werden können.

Fig. 1

**Fig. 2**

Fig. 3